(19) Europäisches Patentamt
European Patent Office
Office européen des brevets

(11) EP 2 310 442 B1

(12) **EUROPÄISCHE PATENTSCHRIFT**

(45) Veröffentlichungstag und Bekanntmachung des Hinweises auf die Patenterteilung:
**04.01.2017 Patentblatt 2017/01**

(21) Anmeldenummer: **09781077.4**

(22) Anmeldetag: **24.07.2009**

(51) Int Cl.:
***C08G 77/458*** *(2006.01)* ***C09D 183/10*** *(2006.01)*

(86) Internationale Anmeldenummer:
**PCT/EP2009/059610**

(87) Internationale Veröffentlichungsnummer:
**WO 2010/015533 (11.02.2010 Gazette 2010/06)**

(54) **VERWENDUNG EINES ORGANOPOLYSILOXAN/POLYHARNSTOFF-BLOCKCOPOLYMERS ALS BESCHICHTUNG AUF KUNSTSTOFF-OBERFLÄCHEN**

USE OF AN ORGANOPOLYSILOXANE/POLYUREA BLOCK COPOLYMER AS A COATING ON PLASTIC SURFACES

UTILISATION D'UN COPOLYMÈRE SÉQUENCÉ ORGANOPOLYSILOXANE/POLYURÉE COMME REVÊTEMENT SUR DES SURFACES PLASTIQUES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **06.08.2008 DE 102008036518**

(43) Veröffentlichungstag der Anmeldung:
**20.04.2011 Patentblatt 2011/16**

(73) Patentinhaber: **tesa SE**
**22848 Norderstedt (DE)**

(72) Erfinder:
- **BEHRENS, Nicole**
**81241 München (DE)**
- **VIRUS, Frank**
**22303 Hamburg (DE)**
- **MÜSSIG, Bernhard**
**21218 Seevetal (DE)**
- **LÜHMANN, Bernd**
**22844 Norderstedt (DE)**

(56) Entgegenhaltungen:
**US-A- 5 290 615**
**US-A- 5 792 554**
**US-A1- 2003 165 676**
**US-B2- 6 793 759**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 310 442 B1

## Beschreibung

Die Erfindung betrifft die Verwendung eines Organopolysiloxan/Polyharnstoff-Blockcopolymers as Beschichtung auf Kunststoff-Oberflächen.

Der Einsatz von silikonisierten Trennpapieren und -folien in Verbindung mit Acrylat- und Kautschukklebemassen ist seit langem bekannt und findet eine breite Anwendung. Ein Nachteil ist allerdings die Gefahr des Silikon-Übertrags auf Oberflächen, die in der Folge einen schlechten Haftuntergrund für Haftklebemittel und Farben aufweisen. Ein Übertrag kann auch direkt auf das Haftklebemittel erfolgen und dadurch eine Depression der Klebkraft bewirken. Ursache dieses Übertrags ist, dass die Härtung herkömmlicher Polysiloxane erst nach der Beschichtung auf das Trennpapier oder die Trennfolie erfolgt, da das vernetzte Produkt unlöslich ist. Die Härtung ist in der Regel unvollständig, so dass kurzkettige Polysiloxane zurückbleiben, die auf andere Oberflächen übertragen werden können.

Eine nachträgliche Vernetzung ist im Fall von Organopolysiloxan/Polyharnstoff-Blockcopolymeren nicht nötig, da diese auch mit den für eine Trennwirkung nötigen Molekulargewichten in verschiedenen Lösungsmitteln löslich sind. Soweit das Organopolysiloxan/Polyharnstoff-Blockcopolymer von Verunreinigungen frei ist, kann es daher nicht zu einem Silikon-Übertrag kommen.

Copolymere mit Organopolysiloxan- und Polyharnstoff-Blöcken werden in I. Yilgör, Polymer, 1984 (25), 1800 und EP 0 250 248 A1 beschrieben. Die Herstellung der Polydiorganosiloxan-Harnstoffblockcopolymere erfolgt in beiden Fällen in zwei Stufen. Im ersten Schritt werden bisaminoalkylfunktionelle Siloxane erhalten, die im zweiten Schritt mit Isocyanaten zum Blockcopolymer umgesetzt werden. Im von I. Yilgör durchgeführten Verfahren werden allerdings nur Polydiorganosiloxan-Harnstoffblockcopolymere mit Polysiloxan-Segmenten mit Molekulargewichten ($M_w$) von weniger als 4000 erhalten. Weiterhin führt ein unvollständiger Reaktionsverlauf zu Verunreinigungen mit mono- und nicht-funktionellen Siloxanen. In EP 0 250 248 A1 wird dagegen beschrieben, dass über eine mit speziellen Äquilibrierungskatalysatoren besonders sorgfältig durchgeführte Äquilibrierungsreaktion bisaminoalkylterminierte Polydimethylsiloxan-Ketten erhalten werden, die auch in höheren Molekulargewichtsbereichen eine ausreichende Reinheit besitzen, um bei der Reaktion mit Diisocyanaten die für gute mechanische Eigenschaften der Endpolymere erforderlichen hohen Molekulargewichte sicherzustellen.

Über Äquilibrierungsreaktionen hergestellte difunktionelle Silikone haben jedoch mehrere Nachteile. Am Ende der Äquilibrierungsreaktion muss der Katalysator entweder thermisch deaktiviert oder neutralisiert werden, was zu Katalysatorresten und somit Verunreinigungen im Endprodukt führt, die negative Auswirkungen auf die thermische Beständigkeit der so hergestellten Materialien haben. Diese Verunreinigungen sind ebenfalls für einen starken Eigengeruch der daraus synthetisierten Materialien verantwortlich. Weiterhin müssen noch ca. 15 % Siloxancyclen entfernt werden, was aber in der Regel technisch nicht vollständig möglich ist, so dass solche Siloxancyclen im Produkt verbleiben und aus Folgeprodukten ausschwitzen. Während einer thermischen Behandlung neigen die so hergestellten Silikone dazu, einen deutlich sichtbaren Gelbstich anzunehmen.

Die Herstellung verunreinigungsfreier Organopolysiloxan/Polyharnstoff-Blockcopolymere wird in EP1 489 129 A1 beschrieben. Da in diesem Verfahren kein Katalysator eingesetzt werden muss, führt es zu Produkten, die thermisch beständiger sind sowie nur einen geringen Eigengeruch und eine geringe Tendenz aufweisen, einen Gelbstich anzunehmen.

US 5,792,554 beschreibt Diblock (B-A)- und Triblock (B-A-B)-Polydiorganosiloxan-Polyharnstoff-Blockcopolymere, die unfunktionalisierte Polydiorganosiloxan-Endblöcke B und Polyharnstoffblöcke A umfassen. Diese Blockcopolymere verbessern das Trennverhalten entsprechender Releasebeschichtungen.

US 2003/0165676 A1 beschreibt Primer-Zusammensetzungen, die ein Polydiorganosiloxan-Polyharnstoff-Copolymer mit elektronenreichen Gruppen enthalten.

Eine Methode zur Verbesserung der Adhäsion nichtklebender Oberflächen, z. B. ausgehärteter Silikone, auf Keramiken oder Halbleitern unter Anwendung einer Plasmabehandlung der Oberflächen wird in US 6,793,759 B2 beschrieben.

Die Verwendung von Polydiorganosiloxan-Harnstoffblockcopolymeren als Antihaftmittel auf Klebebändern wird in US 5,290,615 A1 beschrieben. Allerdings werden diese Copolymere durch das in EP 0 250 248 A1 beschriebene unvorteilhafte Verfahren hergestellt, so dass ein schlechtes Alterungsverhalten zu erwarten ist. Weiterhin enthalten die Copolymere bis zu 95 Gew.-% eines Siloxan freien Diamino- oder Dihydroxy-Derivats. Polydiorganosiloxan-Harnstoffblockcopolymere nach

US 5,290,625 A1 haften nicht auf unbehandelten Polyester oder Polyolefin-Oberflächen. Werden diese Blockcopolymere auf solche Oberflächen aufgebracht, so lassen sie sich bereits durch leichte mechanische Beanspruchung wieder entfernen. Die US 5,290,625 A1 beschreibt lediglich die Beschichtung auf Urethan getränktem Papier.

Die Aufgabe der Erfindung ist es daher, eine Beschichtung auf einer vorbehandelten Kunststoff-Oberfläche, deren polarer Anteil der Oberflächenenergie wenigstens doppelt so groß ist wie der der unbehandelten aber in den übrigen Eigenschaften identischen Kunststoff-Oberfläche, zur Verbesserung der Releaseeigenschaft der Kunststoff-Oberfläche, wobei die Beschichtung eine gute Haftung auf der Kunststoff-Oberfläche aufweisen soll.

Gelöst wird diese Aufgabe überraschend durch die Verwendung des im Hauptanspruch dargelegten Organopolysiloxan/Polyharnstoff-Blockcopolymers. Gegenstand der Unteransprüche sind vorteilhafte Fortbildungen des Erfindungsgegenstandes. Des Weiteren betrifft die Erfindung Verwendungsvorschläge der erfindungsgemäßen Beschichtung.

Demgemäß betrifft die Erfindung Verwendung eines Organopolysiloxan/Polyharnstoff-Blockcopolymers nach Formel 1

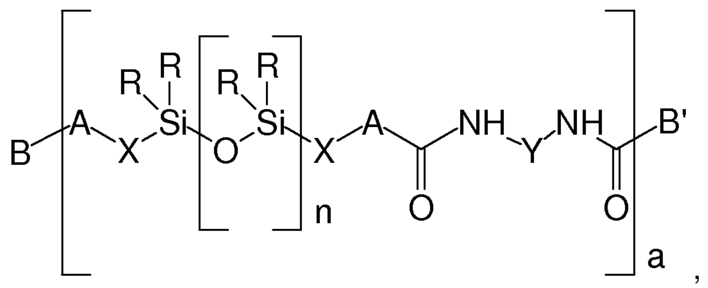

wobei

R einen einwertigen, gegebenenfalls durch Fluor oder Chlor substituierten Kohlenwasserstoffrest mit 1 bis 20 Kohlenstoffatomen,
**X** einen Alkylen-Rest mit 1 bis 20 Kohlenstoffatomen, in dem einander nicht benachbarte Methyleneinheiten durch Gruppen -O- ersetzt sein können, oder einen Arylenrest mit 6 bis 22 Kohlenstoffatomen,
A ein Sauerstoffatom oder eine Aminogruppe -NR'-,
R' Wasserstoff oder einen Alkylrest mit 1 bis 10 Kohlenstoffatomen,
Y einen zweiwertigen, gegebenenfalls durch Fluor oder Chlor substituierten Kohlenwasserstoffrest mit 1 bis 20 Kohlenstoffatomen,
B, B' eine reaktive oder nicht reaktive Endgruppe, welche kovalent an das Polymer gebunden ist.
n eine Zahl von 1 bis 4000 und
a eine Zahl von mindestens 10 bedeuten,

als Beschichtung auf einer vorbehandelten Kunststoff-Oberfläche, deren polarer Anteil der Oberflächenenergie wenigstens doppelt so groß ist wie der der unbehandelten Kunststoff-Oberfläche.

Gemäß einer ersten vorteilhaften Ausführungsform der Erfindung wird ein Organopolysiloxan/Polyharnstoff-Blockcopolymer eingesetzt, das, wie in EP 1 489 129 A1 beschrieben, in einem einstufigen Reaktionsverlauf ohne Einsatz eines Katalysators polymerisiert wird.

Vorzugsweise bedeutet R einen einwertigen Kohlenwasserstoffrest mit ein bis sechs Kohlenstoffatomen, insbesondere nicht substituiert. Besonders bevorzugt als Rest R ist Methyl.

Vorzugsweise bedeutet X einen Alkylen-Rest mit zwei bis zehn Kohlenstoffatomen. Vorzugsweise ist der Alkylen-Rest X nicht unterbrochen. Besonders bevorzugt bedeutet der Rest X Propylen.

Vorzugsweise bedeutet A eine NH-Gruppe.

Vorzugsweise bedeutet Y einen Kohlenwasserstoffrest mit 3 bis 13 Kohlenstoffatomen, der vorzugsweise nicht substituiert ist. Vorzugsweise bedeutet Y einen Aralkylen-, linearen oder cyclischen Alkylen-Rest.

B bedeutet vorzugsweise einen funktionellen oder nichtfunktionellen organischen oder siliziumorganischen Rest. Beispielsweise bedeutet B eine Organosilylgruppe wie beispielsweise eine Alkylsilyl-, Alkoxysilyl- oder Oximosilyl-Gruppe, insbesondere mit 1 bis 4 Kohlenstoffatomen wie beispielsweise eine Methoxy- oder Ethoxysilyl-Gruppe, ein Wasserstoff oder eine Acylgruppe, die allesamt über kovalente Bindungen mit dem Polymer verbunden sind. B kann weiterhin einen radikalisch oder ionisch polymerisierbaren Rest wie beispielsweise ein Vinyl-, Acryl-, Methacryl-, Acylamid- oder Methacrylamidrest oder auch einen Epoxidrest wie beispielsweise ein Propylenoxidrest bedeuten. Weiterhin kann B eine gegebenenfalls substituierte Alkylgruppe mit vorzugsweise 1 bis 20 Kohlenstoffatomen, eine gegebenenfalls substituierte Arylgruppe mit vorzugsweise 6 bis 22 Kohlenstoffatomen oder eine Alkylarylgruppe, welche substituiert oder unsubstituiert sein kann, bedeuten. Besonders bevorzugt ist B eine Methoxysilylgruppe, Ethoxysilylgruppe, ein Wasserstoff, eine Aminoalkylgruppe oder eine Isocyanat enthaltende Gruppe. Weiterhin können die Reste A und B einen Isocyanatrest bilden.

B' bedeutet vorzugsweise einen funktionellen oder nichtfunktionellen organischen oder siliziumorganischen Rest. Beispielsweise bedeutet B' eine Organosilylgruppe, ein Wasserstoff, eine Aminoalkylgruppe, eine Hydroxygruppe oder eine NCO-Gruppe, die allesamt über kovalente Bindungen mit dem Polymer verbunden sind. B' kann weiterhin

einen radikalisch oder ionisch polymerisierbaren Rest wie beispielsweise ein Vinyl-, Acryl-, Methacryl-, Acylamid- oder Methacrylamidrest oder auch einen Epoxidrest wie beispielsweise Propylenoxidrest bedeuten. Weiterhin kann B' eine gegebenenfalls substituierte Alkylgruppe mit vorzugsweise 1 bis 20 Kohlenstoffatomen, eine gegebenenfalls substituierte Arylgruppe mit vorzugsweise 6 bis 22 Kohlenstoffatomen oder eine Alkylarylgruppe, welche substituiert oder unsubstituiert sein kann, bedeuten. Besonders bevorzugt ist B' eine Methoxysilylgruppe, Ethoxysilylgruppe, ein Wasserstoff, eine Aminoalkylgruppe, eine Hydroxygruppe oder eine Isocyanat enthaltende Gruppe.

n bedeutet vorzugsweise eine Zahl von mindestens 3, insbesondere mindestens 25 und vorzugsweise höchstens 800, insbesondere höchstens 400, besonders bevorzugt höchstens 250.

Vorzugsweise bedeutet a eine Zahl von höchstens 50.

Als Polydiorganosiloxandiamin wird bevorzugt solches der allgemeinen Formel 2

$$H_2N\text{-}X\text{-}[SiR_2O]_nSiR_2\text{-}X\text{-}NH_2,$$

wobei R, X und n die oben dafür angegebenen Bezeichnungen haben, eingesetzt.

Vorzugsweise sind im Copolymer der allgemeinen Formel 1, bezogen auf die Summe der Urethan- und Harnstoffgruppen, mindestens 50 Mol-%, besonders bevorzugt mindestens 75 Mol-% Harnstoffgruppen enthalten.

Als Polyisocyanat wird bevorzugt ein Diisocyanat der allgemeinen Formel 3

$$OCN\text{-}Y\text{-}NCO,$$

wobei Y die oben dafür angegebene Bedeutung hat, eingesetzt.

Beispiele für die zu verwendenden Diisocyanate der allgemeinen Formel 3 sind aliphatische Verbindungen wie Isophorondiisocyanat, Hexamethylen-1,6-diisocyanat, 2,2,4- und 2,4,4-Trimethylhexamethylendiisocyanat, Cyclohexylendiisocyanat, Tetramethylen-1,4-diisocyanat und Methylendicyclohexyl-4,4'-diisocyanat oder aromatische Verbindungen wie Methylendiphenyl-4,4'-diisocyanat, 2,4-Toluoldiisocyanat, 2,5-Toluoldiisocyanat, 2,6-Toluoldiisocyanat, m-Phenylendiisocyanat, p-Phenylendiisocyanat, m-Xyloldiisocyanat, Tetramethyl-m-xyloldiisocyanat, Mischungen dieser Isocyanate oder geblockte Typen. Ein Beispiel für kommerziell erhältliche derartige Verbindungen sind die Diisocyanate der DESMODUR®-Reihe (H, I, M, T, W) der Bayer AG, Leverkusen, Deutschland oder die Vestanat-Reihe der Evonik Degussa GmbH, Düsseldorf, Deutschland. Bevorzugt sind aliphatische Diisocyanate, bei denen Y ein Alkylenrest ist, da diese Copolymere mit verbesserter UV-Stabilität ergeben, was bei einer Außenanwendung der Polymere von Vorteil ist.

Das erfindungsgemäß eingesetzte Organopolysiloxan/Polyharnstoff-Blockcopolymer ist beispielsweise löslich in wasserfreiem Isopropanol, Methylethylketon und Tetrahydrofuran.

Gemäß einer weiteren vorteilhaften Ausführungsform der Erfindung handelt es sich bei der Kunststoff-Oberfläche um eine physikalisch beispielsweise durch Beflammung, Corona- oder Plasma-Behandlung vorbehandelte Oberfläche.
Eine weitere erfindungsgemäße Vorbehandlung von Polyethylenterephthalat-Oberflächen ist das Ätzen mit Trichloressigsäure.

Beispiele von Kunststoff-Oberflächen sind die Oberflächen von biaxial verstrecktem Polyethylenterephthalat, Polybuten, Polypropylen, monoaxial verstrecktem Polypropylen, biaxial verstrecktem Polypropylen, oder Polyethylen.

Um eine optimale Haftung des Organopolysiloxan/Polyharnstoff-Blockcopolymers auf der Kunststoff-Oberfläche zu gewährleisten, muss nach der physikalischen Vorbehandlung der polare Anteil der Oberflächenenergie der Kunststoff-Oberfläche wenigstens doppelt so groß sein wie der der unbehandelten aber in den übrigen Eigenschaften identischen Kunststoff-Oberfläche. Der polare Anteil der Oberflächenenergie ist definitionsgemäß der Anteil, der auf den unterschiedlichen Elektronegativitäten verschiedener Atome im selben Molekül beruht. Die Oberflächenenergie eines Stoffs setzt sich aus der Summe des polaren und des dispersen Anteils zusammen. Der disperse Anteil beschreibt den Anteil der Oberflächenenergie, der sich aus den Anziehungskräften zwischen ungeladenen, unpolarisierten Atomen und Molekülen ergibt.

Aufgrund ihrer antiadhäsiven Eigenschaften wirkt die Beschichtung als Trennmittel.

Vorzugsweise handelt es sich bei der Kunststoff-Oberfläche um eine Kunststofffolie, auf die die Beschichtung bevorzugt als geschlossene Schicht aufgetragen wirkt.

Weiter vorzugsweise ist auf der freien, der der Beschichtung mit Organopolysiloxan/Polyharnstoff-Blockcopolymer gegenüberliegenden Seite der Kunststofffolie eine Haftklebemasse vorhanden, so dass sich ein einseitig klebendes Klebeband ergibt, in dem die Beschichtung als Trennmittel wirkt.

Bei der auf der Trägerfolie angeordneten Klebemassenschicht handelt es sich vorzugsweise um eine Schicht aus Acrylat-, Polyurethan- und Kautschukklebemasse.

Die Trägerfolie wird für die Klebebandanwendung einseitig mit dem bevorzugten Haftkleber als Lösung oder Dispersion oder 100 %ig (zum Beispiel Schmelze) oder durch Coextrusion mit der Folie beschichtet. Alternativ ist eine

Beschichtung durch Transfer einer Klebemassen-Schicht durch Kaschieren möglich. Die Klebeschicht(en) können durch Wärme oder energiereiche Strahlen vernetzt und erforderlichenfalls mit Trennfolie oder Trennpapier abgedeckt werden.

Zur Optimierung der Eigenschaften kann bevorzugt die zum Einsatz kommende Selbstklebemasse mit einem oder mehreren Additiven wie Klebrigmachern (Harzen), Weichmachern, Füllstoffen, Pigmenten, UV-Absorbern, Lichtschutz-, Alterungsschutzmitteln, Vernetzungsmitteln, Vernetzungspromotoren oder Elastomeren abgemischt sein.

Die Menge der Klebstoffschicht beträgt bevorzugt 10 bis 120 g/m$^2$, vorzugsweise 25 bis 100 g/m$^2$ (gemeint ist die Menge nach einer eventuell notwendigen Entfernung von Wasser oder Lösungsmittel; die Zahlenwerte entsprechen auch in etwa der Dicke in $\mu$m).

Der zur einseitigen Ausrüstung der Trägerfolie einzusetzende Haftkleber ist besonders bevorzugt eine Polyacrylathaftklebemasse, die ein Polymer umfasst, das in Bezug auf das Polymer

- 79 bis 100 Gew.-% Acrylsäureester und/oder Methacrylsäureester und/oder deren freie Säuren Formel $CH_2$=C($R^3$)($COOR^4$), wobei $R^3$ H und/oder $CH_3$ darstellt und $R^4$ H und/oder Alkylketten mit 1 bis 30 C-Atomen darstellt, und
- 0 bis 30 Gew.-% olefinisch ungesättigte Monomere mit funktionellen Gruppen umfasst,

wobei sich die Gewichtsangaben auf das Polymer beziehen. Polyacrylathaftklebemassen sind erfindungsgemäß gegenüber anderen Klebemassen wie zum Beispiel Naturkautschuk- oder Synthesekautschuk-Klebemassen bevorzugt, da die antiadhäsive Wirkung des Organopolysiloxan/Polyharnstoff-Blockcopolymers in Verbindung mit Polyacrylathaftklebemassen am stärksten ist.

Vorteilhaft ist eine physikalische Vorbehandlung der mit Haftklebemasse zu beschichtenden Trägerfolienseite zur Verbesserung der Haftung, beispielsweise durch Flamm-, Plasma- oder Coronabehandlung.

Bei Bedarf kann vor dem Aufbringen der Haftkleberschicht auf der Trägerfolie eine Primerschicht, insbesondere lösungsmittelfrei wie zum Beispiel durch Coextrusion, aufgebracht werden, so dass sich zwischen der Trägerfolienschicht und einer Haftkleberschicht eine Primerschicht befindet.

Von der Erfindung umfasst werden auch erfindungsgemäß beschriebene Klebebänder, die in unmittelbarer oder mittelbarer Nachbarschaft zur Trägerschicht noch mindestens eine Funktionsschicht aufweisen.
Möglich ist hier beispielsweise der Einsatz einer Primer-Schicht zwischen Trägerschicht und Klebemassenschicht oder eine Schicht eines Farblacks zwischen Trägerschicht und Organopolysiloxan/Polyharnstoff-Blockcopolymer oder als äu ßere Schicht auf dem Organopolysiloxan/Polyharnstoff-Blockcopolymeren. Vorteilhaft ist die Verwendung einer Primerschicht zwischen Trägerschicht und Klebmasse zur Verbesserung der Haftung der Klebmasse auf der Trägerschicht und somit der Vermeidung der Übertragung von Klebstoff auf die Folienrückseite während des Abwickelns der Rollen.

Als Primer sind die bekannten Dispersion- und Lösungsmittelsysteme verwendbar, zum Beispiel auf Basis von isopren- oder butadienhaltigen Kautschuken und/oder Cyclokautschuken. Isocyanate oder Epoxyharze als Additive verbessern die Haftung und erhöhen zum Teil auch die Scherfestigkeit des Haftklebstoffes. Physikalische Oberflächenbehandlungen wie Beflammung, Corona oder Plasma oder Coextrusionsschichten sind ebenfalls geeignet, die Haftung zu verbessern. Besonders bevorzugt ist die Nutzung vorgenannter Verfahren bei Verwendung lösungsmittelfreier Klebstoffschichten, insbesondere solche auf Acrylatbasis.

Beschreibungen der üblichen Primer finden sich zum Beispiel in "Handbook of Pressure Sensitive Adhesive Technology", D. Satas, (3. Auflage).

Eine weitere mögliche Anwendung der erfindungsgemäßen Beschichtung aus Organopolysiloxan/Polyharnstoff-Blockcopolymeren besteht in der Verwendung als Haftvermittler (Primer), insbesondere für die Anbindung von Silikonklebmassen auf den Kunststoff-Trägermaterialien.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte, Etiketten, Stanzlinge und dergleichen.

Prüfmethoden

Die Messungen werden, wenn nicht anders angegeben, bei einem Prüfklima von 23 $\pm$ 1 °C und 50 $\pm$ 5 % rel. Luftfeuchte durchgeführt.

Die Dichte der Polymeren wird nach ISO 1183 ermittelt und in g/cm$^3$ ausgedrückt.

Der Kristallitschmelzpunkt ($T_{cr}$) wird mit DSC nach MTM 15902 (Basell-Methode) beziehungsweise ISO 3146 ermittelt.

Die Verankerung der Beschichtung wird durch Rubbeln mit einem Zeigefinger (jeweils dreimal in Maschinen- und Querrichtung) überprüft. Das Ergebnis wird in folgenden Abstufungen beurteilt:

- sehr gut (sehr gute Verankerung),

- gut (nichts abgelöst, leichte Spuren sichtbar),
- noch gut (nichts abgelöst, deutliche Spuren sichtbar),
- schlecht (etwas, viel beziehungsweise alles abgelöst).

Zur Bestimmung der Trennkraft wird an einer Verklebung von zwei jeweils 20 mm breiten Teststreifen bestimmt. Der erste der Teststreifen ist dabei eine mit einem Organopolysiloxan/Polyharnstoff-Blockcopolymeren beschichtete Folie oder ein Klebeband mit entsprechender Rückseiten-Beschichtung. Der andere Teststreifen ist ein Testklebeband mit der Produktnummer tesa® 7475, tesa® 7476 oder tesa® 4579.
Bei tesa® 7475 handelt es sich um ein Klebeband mit einer PVC-Folie als Träger, auf den eine Acrylatmasse aufgebracht ist (Klebkraft auf Stahl 31,25 N/25 mm). Bei tesa® 7476 handelt es sich um ein Klebeband mit einem Baumwollgewebe als Träger, auf den eine Kautschukmasse aufgebracht ist (Klebkraft auf Stahl 25 N/25 mm). tesa® 4579 ist ein längs und quer verstärktes Filamentklebeband auf Basis einer PP-Folie mit einer Klebkraft auf Stahl von 8 N/cm.
Die Verklebung des zweiten Testklebebands erfolgt immer auf die mit Organopolysiloxan/Polyharnstoff-Blockcopolymeren beschichtete Seite des ersten Teststreifens. Die Probe wird vor der Messung für 24 Stunden bei 40 °C (für tesa® 7476 und tesa® 4579) beziehungsweise 70 °C (tesa® 7475) unter einer Gewichtsbelastung der Verklebung von 2 $N/cm^2$ gelagert. Nach der Lagerung werden die Teststreifen auf eine Länge von 220 mm zugeschnitten und für zwei Stunden bei Prüfklima gelagert. Für die Messung wird der obere Teststreifen der Verklebung in die obere Klemmbacke einer Zugprüfmaschine, wie sie in AFERA 4001 verwendet wird, eingespannt. Der untere Teststreifen wird in der unteren Klemmbacke eingespannt. Der Klemmbackenabstand beträgt dabei 50 mm. Die Messung erfolgt mit einer Geschwindigkeit von 300 mm/min, mit der die Klemmbacken auseinander gefahren werden. Der über eine Strecke von 100 mm ermittelte Mittelwert der für die Trennung der Verklebung benötigten Kraft entspricht der Trennkraft.
Die Klebkräfte werden bei einem Abzugswinkel von 180° nach AFERA 4001 an (nach Möglichkeit) 20 mm breiten Teststreifen bestimmt. Hierbei werden Stahlplatten nach AFERA-Norm als Prüfuntergrund verwendet.
Die Klebkraftdepression ergibt sich aus den Klebkräften ohne Lagerung ($KK_{ohneLagerung}$) und den verbleibenden Klebkräften nach Lagerung ($KK_{Lagerung}$) nach folgender Formel:

$$\text{Klebkraftdepression}[\%] = \frac{KK_{ohneLagerung} - KK_{Lagerung}}{KK_{ohneLagerung}}$$

Die Dicke wird nach DIN 53370 bestimmt, wobei der Taster plan (nicht gewölbt) ist. Bei strukturierten Folien wird jedoch die Dicke vor dem Prägen zugrunde gelegt. Dies ist auch nachträglich über das Flächengewicht (ermittelt nach DIN 53352) und Umrechnung mit der Dichte möglich. Die Prägetiefe ist die Differenz zwischen den Dicken mit und ohne Prägung.
Folgende Beispiele sollen die Erfindung erläutern, ohne deren Umfang zu beschränken:

**Beispiele**

Verwendete Organopolysiloxan/Polyharnstoff-Blockcopolymere:

Organopolysiloxan/Polyharnstoff-Blockcopolymer 1 (OPB1): Blockcopolymer, in dessen Struktur nach Formel 1

R Methyl,
X Propylen,
A eine Aminogruppe -NH-,
B und B' $NH_2$,
n ca. 42 und
a ca. 20 darstellen.
Y ergibt sich durch die Verwendung des Diisocyanats Methylendicyclohexyl-4,4'-diisocyanat (H12MDI, Desmodur W® der Bayer AG, Leverkusen, Deutschland) nach Formel 3.

Ein sehr ähnliches Organopolysiloxan/Polyharnstoff-Blockcopolymer wird von der Wacker Chemie AG, Burghausen, Deutschland unter dem Handelsnamen Geniomer 140 vertrieben.
Organopolysiloxan/Polyharnstoff-Blockcopolymer 2 (OPB2): Blockcopolymer, in dessen Struktur nach Formel 1

R Methyl,
X Propylen,
A eine Aminogruppe -NH-,

B und B' $NH_2$,
n ca. 42 und
a ca. 35 darstellen.
Y ergibt sich durch die Verwendung des Diisocyanats Isophorondiisocyanat (IPDI) nach Formel 3.

Ein sehr ähnliches Organopolysiloxan/Polyharnstoff-Blockcopolymer wird von der Wacker Chemie AG, Burghausen, Deutschland unter dem Handelsnamen Geniomer 80 vertrieben.

**Beispiel 1**

OPB1 wird in wasserfreiem Isopropanol gelöst, so dass eine 2 Gew.-%ige Lösung erhalten wird. Die Lösung wird auf Corona vorbehandelte Folie (Corona-Dosis für PET: 75 Wmin/$m^2$, für Polyolefine: 45 Wmin/$m^2$) mit einem Drahtrakel aufgetragen, so dass ein theoretischer Masseauftrag von 0,24 g/$m^2$ erhalten wird. Das lackierte Muster wird für 2 Minuten bei 120 °C getrocknet.

Auf die mit OPB1 beschichtete Seite der so erhaltenen Folie wird ein Testklebeband aufgeklebt und der Verbund entsprechend der Prüfvorschrift für Trennkräfte gelagert und geprüft.

**Beispiel 2**

OPB2 wird in wasserfreiem Isopropanol gelöst, so dass eine 2 Gew.-%ige Lösung erhalten wird. Die Lösung wird auf Corona vorbehandelte Folie (Corona-Dosis für PET: 75 Wmin/$m^2$, für Polyolefine: 45 Wmin/$m^2$) mit einem Drahtrakel aufgetragen, so dass ein theoretischer Masseauftrag von 0,24 g/$m^2$ erhalten wird. Das lackierte Muster wird für 2 Minuten bei 120°C getrocknet.

Die Prüfung erfolgt gemäß Beispiel 1.

**Beispiel 3**

OPB2 wird in wasserfreiem Isopropanol gelöst, so dass eine 2 Gew.-%ige Lösung erhalten wird. Die Lösung wird auf geätzte PET-Folie mit einem Drahtrakel aufgetragen, so dass ein theoretischer Masseauftrag von 0,24 g/$m^2$ erhalten wird. Das lackierte Muster wird für 2 Minuten bei 120°C getrocknet.

Die Prüfung erfolgt gemäß Beispiel 1.

**Beispiel 4**

Herstellung des Polyacrylats.

Ein für radikalische Polymerisationen konventioneller 2-L-Glasreaktor wurde mit 40 g Acrylsäure, 360 g 2-Ethylhexylacrylat und 133 g Aceton/Isopropanol (96:4) befüllt. Nach 45 Minuten Durchleiten von Stickstoffgas unter Rühren wurde der Reaktor auf 58 °C hochgeheizt und 0,2 g Azoisobutyronitril (AIBN, Vazo 64®, Firma DuPont) hinzugegeben. Anschließend wurde das äußere Heizbad auf 75 °C erwärmt und die Reaktion konstant bei dieser Außentemperatur durchgeführt. Nach 1 h Reaktionszeit wurden wiederum 0,2 g AIBN hinzugegeben. Nach 4 und 8 h wurde mit jeweils 100 g Aceton/Isopropanol (96:4)-Gemisch verdünnt. Zur Reduktion der Restinitiatoren wurden nach 8 und nach 10 h jeweils 0,6 g Bis-(4-tert.-butylcyclohexanyl)-peroxy-dicarbonat (Perkadox 16®, Firma Akzo Nobel) hinzugegeben. Die Reaktion wurde nach 24 h Reaktionszeit abgebrochen und auf Raumtemperatur abgekühlt. Das Polyacrylat wird mit 0,4 Gew.-% Aluminium-(III)-acetylacetonat (3 Gew.-%ige Lösung in Isopropanol) abgemischt, auf einen Feststoffgehalt von 30 % mit Isopropanol verdünnt.

Beschichtung

OPB1 wird in wasserfreiem Isopropanol gelöst, so dass eine 1 Gew.-%ige Lösung erhalten wird. Die Lösung wird auf Corona-vorbehandelte MOPP-Folie (40 µm, Corona-Dosis: 33 Wmin/$m^2$) mit einem Drahtrakel aufgetragen, so dass ein theoretischer Masseauftrag von 0,24 g/$m^2$ erhalten wird. Das lackierte Muster wird für 2 Minuten bei 120 °C getrocknet.
In einem zweiten Beschichtungsgang wird die zweite, noch unbeschichtete Seite, ebenfalls Corona behandelt (Dosis: 33 Wmin/$m^2$) und anschließend mit der Polyacrylat-Lösung beschichtet. Nach Trocknung für 20 Minuten bei 90 °C betrug der Masseauftrag 50 g/$m^2$. Das so erhaltene Klebeband wird zu Stangen gewickelt.

Auf die mit OPB1 beschichtete Seite des so erhaltenen Klebebands wird nach dem Abwickeln ein Testklebeband

aufgeklebt. Die mit Klebemasse beschichtete Seite wird mit einer PVC-Folie abgedeckt und der Verbund entsprechend der Prüfvorschrift für Trennkräfte gelagert und geprüft.

**Vergleichsbeispiel 1**

OPB2 wird in wasserfreiem Isopropanol gelöst, so dass eine 2 Gew.-%ige Lösung erhalten wird. Die Lösung wird auf unbehandelte Kunststofffolie mit einem Drahtrakel aufgetragen, so dass ein theoretischer Masseauftrag von 0,24 g/$m^2$ erhalten wird. Das lackierte Muster wird für 2 Minuten bei 120°C getrocknet.

Die Prüfung erfolgt gemäß Beispiel 1.

**Vergleichsbeispiel 2**

OPB1 wird in wasserfreiem Isopropanol gelöst, so dass eine 2 Gew.-%ige Lösung erhalten wird. Die Lösung wird auf unbehandelte PET-Folie und MOPP-Folie mit einem Drahtrakel aufgetragen, so dass ein theoretischer Masseauftrag von 0,24 g/$m^2$ erhalten wird. Das lackierte Muster wird für 2 Minuten bei 120°C getrocknet.

Die Prüfung erfolgt gemäß Beispiel 1.

Tabelle 1: Liste der eingesetzten Folien.

| | Handelsname | Hersteller |
|---|---|---|
| PE | Rohstoff:<br>ExxonMobil LD251 | ExxonMobil Chemical, Machelen, Belgien |
| PE-Ionomer | Rohstoffe: ExxonMobil LD251 (25 %), Ineos Novex M21E760 (75 %) | ExxonMobil Chemical, Machelen, Belgien<br>Ineos, Lyndhurst, UK |
| PP | Rohstoff:<br>Borealis HD905CF | Borealis, Wien, Österreich |
| MOPP | PPK, natur | Nowofol, Siegsdorf, Deutschland |
| BOPP | GND 50 | Treofan, Raunheim, Deutschland |
| PET | Hostaphan RN75 | Mitsubishi Polyester Film, Wiesbaden, Deutschland |
| PET, geätzt | Polibond D23H | Polifibra, Limburg, Deutschland |

Die PE-, die PE-Ionomer- und die PP-Folie wurden in Eigenfertigung hergestellt.

<u>Vergleich der Eigenschaften</u>

Tabelle 2: Oberflächenenergien, Verankerung der Beschichtung und Trennkräfte für die eingesetzten Folien.

| | Bsp. -Nr. | Polymer | Oberflächen -energie σ [mN/m] | Polarer Anteil [mN/m] | Verankerung | Trennkräfte | | |
|---|---|---|---|---|---|---|---|---|
| | | | | | | tesa 7475 | tesa 7476 | tesa 4579 |
| OPB2 | V1 | PE | 25,8 | 0,3 | schlecht | | | |
| | 2 | PE* | 43,8 | 8,0 | Sehr gut | 1,3 | 4,0 | |
| | V1 | PEIonomer | 32,6 | 0,9 | schlecht | | | |
| | 2 | PE-Ionomer* | 40,4 | 7,3 | Sehr gut | 1,5 | 4,1 | |
| | V1 | PP | 31,0 | < 0,1 | schlecht | | | |
| | 2 | PP* | 40,0 | 9,1 | gut | 1,2 | 3,7 | |
| | V1 | BOPP | 26,7 | 1,3 | | | | |
| | 2 | BOPP* | 33,3 | 8,8 | Sehr gut | 1,2 | 3,8 | |
| | V1 | PET | 46,2 | 8,1 | Schlecht | | | |
| | 2 | PET* | 52,5 | 20,1 | Gut | 1,2 | 3,3 | |
| | 3 | PET, geätzt | 43,0 | 25,1 | Sehr gut | 1,3 | 3,2 | |
| OPB1 | V2 | PET | 46,2 | 8,1 | Schlecht | | | |
| | 1 | PET* | 52,5 | 20,1 | gut | 0,5 | 2,6 | |
| | V2 | MOPP | 27,7 | 1,6 | schlecht | | | |
| | 4 | MOPP* | 36,3 | 4,5 | Sehr gut | 0,5 | 3,0 | 2,8 |
| | 1 | BOPP* | 33,3 | 8,8 | Sehr gut | 0,2 | | |
| * nach Corona-Behandlung | | | | | | | | |

Die Klebkraftdepression lag bei allen Messungen bei maximal 11 %.

Ein Vergleich der Oberflächenenergien der in Tabelle 2 aufgelisteten unbehandelten Folien zeigt eine deutliche Abhängigkeit vom Rohstoff. Besonders Polyethylenterephtalat-Folien besitzen bereits im unbehandelten Zustand eine recht hohe Oberflächenenergie von ca. 46 mN/m. Trotz dieser hohen Oberflächenenergie ist die Verankerung des Organopolysiloxan/Polyharnstoff-Blockcopolymers auf der unbehandelten PET-Folie schlecht. Abhilfe schafft erst die physikalische Vorbehandlung, die die Oberflächenenergie auf 53 mV/m erhöht, wobei besonders der polare Anteil der Oberflächenenergie von 8 auf 20 mV/m angehoben wird. Ähnlich verhält es sich bei den übrigen Folien. Durch die physikalische Behandlung wird besonders der polare Anteil der Oberflächenenergie erhöht, der dann die effektive Verankerung des Organopolysiloxan/Polyharnstoff-Blockcopolymers ermöglicht.

Erfindungsgemäß lässt sich die Beschichtung des Organopolysiloxan/Polyharnstoff-Blockcopolymers als Trennmittel gegen Polyurethan-, Polyacrylat- (tesa® 7475) und Kautschuk-Haftklebemassen (tesa® 7476, tesa® 4579) verwenden. Die durch die Typen OPB1 und OPB2 erhaltenen Trennwerte sind in Tabelle 2 dargestellt. Mit der Type OPB1 lassen sich niedrigere Trennwerte erhalten als mit der Type OPB2. Die niedrigsten Trennkräfte werden für beide Organopolysiloxan/Polyharnstoff-Blockcopolymer-Typen in Verbindung mit Polyacrylathaftklebemassen (tesa® 7475) erzielt. Wünschenswert ist außerdem eine niedrige Klebkraftdepression, die aus einem geringen Anteil niedermolekularer Silikone und einer guten Verankerung auf der Oberfläche resultieren. Beides ist in der erfindungsgemäßen Beschichtung gegeben, wie die Werte der Klebkraftdepression zeigen, die für die getesteten Verklebungen maximal 11 % beträgt. Bei einer mangelhaften Verankerung des Organopolysiloxan/Polyharnstoff-Blockcopolymers, wie sie bei den unbehandelten Kunststoff-Oberflächen in den Vergleichsbeispielen vorliegt, käme es zu einem Übertrag auf die Klebemasse und damit zu einer Beeinträchtigung der Klebkraft nach dem Ablösen vom Organopolysiloxan/Polyharnstoff-Blockcopolymer.

Eine Vorbehandlung der Kunststoff-Oberflächen mit dem Ergebnis der Anhebung des polaren Anteils der Oberflächenenergie ist daher zwingend notwendig, um die Verankerung und damit die Anwendung des Organopolysiloxan/Polyharnstoff-Blockcopolymers als Trennmittel zu ermöglichen. Gleiches gilt für die Anwendung des Organopolysiloxan/Polyharnstoff-Blockcopolymers als Haftvermittler.

## Patentansprüche

1. Verwendung eines Organopolysiloxan/Polyharnstoff-Blockcopolymers nach Formel 1

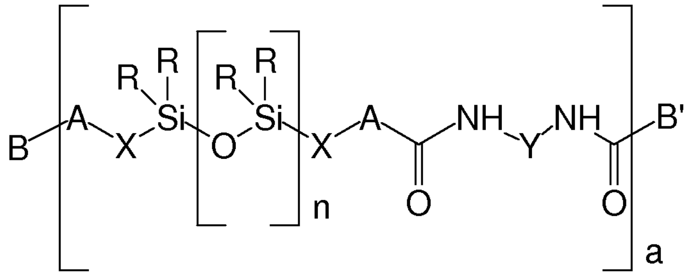

,

wobei

R einen einwertigen, gegebenenfalls durch Fluor oder Chlor substituierten Kohlenwasserstoffrest mit 1 bis 20 Kohlenstoffatomen,
**X** einen Alkylen-Rest mit 1 bis 20 Kohlenstoffatomen, in dem einander nicht benachbarte Methyleneinheiten durch Gruppen -O- ersetzt sein können, oder einen Arylenrest mit 6 bis 22 Kohlenstoffatomen,
A ein Sauerstoffatom oder eine Aminogruppe -NR'-,
R' Wasserstoff oder einen Alkylrest mit 1 bis 10 Kohlenstoffatomen,
Y einen zweiwertigen, gegebenenfalls durch Fluor oder Chlor substituierten Kohlenwasserstoffrest mit 1 bis 20 Kohlenstoffatomen,
B, B' eine reaktive oder nicht reaktive Endgruppe, welche kovalent an das Polymer gebunden ist.
n eine Zahl von 1 bis 4000 und
**a** eine Zahl von mindestens 10 bedeuten,

als Beschichtung auf einer vorbehandelten Kunststoff-Oberfläche, deren polarer Anteil der Oberflächenenergie wenigstens doppelt so groß ist wie der der unbehandelten Kunststoff-Oberfläche.

2. Verwendung nach Anspruch 1,
**dadurch gekennzeichnet, dass**
es sich bei der Kunststoff-Oberfläche um eine physikalisch vorbehandelte Kunststoff-Oberfläche handelt.

3. Verwendung nach Anspruch 2,
**dadurch gekennzeichnet, dass**
die Kunststoff-Oberfläche durch Corona physikalisch vorbehandelt ist.

4. Verwendung nach Anspruch 2 oder 3,
**dadurch gekennzeichnet, dass**
die Kunststoff-Oberfläche durch das Aufbringen einer Primerschicht physikalisch vorbehandelt ist.

5. Verwendung nach zumindest einem der vorherigen Ansprüche,
**dadurch gekennzeichnet, dass**
es sich bei der Kunststoff-Oberfläche um biaxial verstrecktes Polyethylenterephthalat, Polybuten, Polypropylen, monoaxial verstrecktes Polypropylen, biaxial verstrecktes Polypropylen oder Polyethylen handelt.

6. Verwendung nach zumindest einem der vorherigen Ansprüche,
**dadurch gekennzeichnet, dass**
es sich bei der Kunststoff-Oberfläche um eine Kunststofffolie handelt.

7. Verwendung nach Anspruch 6,
**dadurch gekennzeichnet, dass**
auf der freien, der der Beschichtung mit Organopolysiloxan/Polyharnstoff-Blockcopolymer gegenüberliegenden Seite der Kunststofffolie eine Haftklebemasse vorhanden ist.

**8.** Verwendung nach Anspruch 7,
**dadurch gekennzeichnet, dass**
die Haftklebemasse aus der Gruppe bestehend aus Acrylatklebern, Polyurethanklebern und Kautschukklebern gewählt ist.

**9.** Verwendung nach Anspruch 8,
**dadurch gekennzeichnet, dass**
die Haftklebemasse eine Polyacrylathaftklebemasse ist, die ein Polymer umfasst, das im Bezug auf das Polymer

(b1) 79 bis 100 % (w/w) Acrylsäureester und/oder Methacrylsäureester und/oder deren freie Säuren mit der Formel $CH_2=C(R^3)(COOR^4)$, wobei $R^3$ H und/oder $CH_3$ darstellt und $R^4$ H und/oder Alkylketten mit 1 bis 30 C-Atomen darstellt; und
(b2) 0 bis 30 % (w/w) olefinisch ungesättigte Monomere mit funktionellen Gruppen umfasst.

**10.** Verwendung nach zumindest einem der vorherigen Ansprüche,
**dadurch gekennzeichnet, dass**
sich in Nachbarschaft zur Trägerschicht noch mindestens eine weitere Funktionsschicht befindet.

**11.** Verwendung nach zumindest einem der vorherigen Ansprüche,
**dadurch gekennzeichnet, dass**
das Organopolysiloxan/Polyharnstoff-Blockcopolymer in einem einstufigen Reaktionsverlauf polymerisiert wird.

**12.** Verwendung nach zumindest einem der vorherigen Ansprüche,
**dadurch gekennzeichnet, dass**
R einen einwertigen Kohlenwasserstoffrest mit ein bis sechs Kohlenstoffatomen bedeutet, insbesondere nicht substituiert, besonders bevorzugt Methylrest.

**13.** Verwendung nach zumindest einem der vorherigen Ansprüche,
**dadurch gekennzeichnet, dass**
X einen Alkylen-Rest mit zwei bis zehn Kohlenstoffatomen bedeutet, vorzugsweise einen nicht unterbrochenen Alkylen-Rest, besonders bevorzugt bedeutet Propylen.

**14.** Verwendung nach zumindest einem der vorherigen Ansprüche,
**dadurch gekennzeichnet, dass**
A eine NH-Gruppe bedeutet.

**15.** Verwendung nach zumindest einem der vorherigen Ansprüche,
**dadurch gekennzeichnet, dass**
Y einen Kohlenwasserstoffrest mit 3 bis 13 Kohlenstoffatomen bedeutet, vorzugsweise einen nicht substituierten, besonders bevorzugt einen Aralkylen-, linearen oder cyclischen Alkylen-Rest.

**16.** Verwendung nach zumindest einem der vorherigen Ansprüche,
**dadurch gekennzeichnet, dass**
n eine Zahl von mindestens 3 bedeutet, insbesondere mindestens 25 und weiter vorzugsweise höchstens 800, besonders bevorzugt höchstens 400, ganz besonders bevorzugt höchstens 250.

**17.** Verwendung nach zumindest einem der vorherigen Ansprüche,
**dadurch gekennzeichnet, dass**
a eine Zahl von höchstens 50 bedeutet.

**18.** Verwendung nach zumindest einem der vorherigen Ansprüche,
**dadurch gekennzeichnet, dass**
die Beschichtung als Haftvermittler eingesetzt wird, insbesondere für die Anbindung von Silikonklebmassen auf den Kunststoff-Trägermaterialien.

## Claims

**1.** Use of an organopolysiloxane/polyurea block copolymer of formula 1

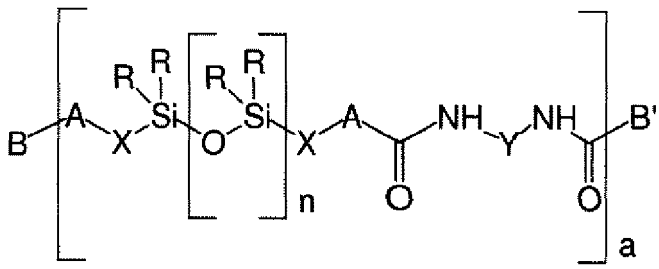

,

where

R are a monovalent, if appropriate fluorine- or chlorine-substituted hydrocarbon moiety having from 1 to 20 carbon atoms,
X are an alkylene moiety having from 1 to 20 carbon atoms, in which methylene units that are not adjacent to one another can have been replaced by -O- groups, or are an arylene moiety having from 6 to 22 carbon atoms,
**A** are an oxygen atom or an amino group -NR'-,
**$R^1$** are hydrogen or an alkyl moiety having from 1 to 10 carbon atoms,
**Y** are a divalent, if appropriate fluorine- or chlorine-substituted hydrocarbon moiety having from 1 to 20 carbon atoms,
**B** and **B'** are a reactive or unreactive terminal group, covalently bonded to the polymer,
**n** is a number from 1 to 4000, and
**a** is a number which is at least 10,

as coating on a pretreated plastics surface, the polar component of the surface energy of which is at least twice as great as that of the untreated plastics surface.

**2.** Use according to Claim 1,
**characterized in that**
the plastics surface is a physically pretreated plastics surface.

**3.** Use according to Claim 2,
**characterized in that**
the plastics surface has been physically pretreated via corona treatment.

**4.** Use according to Claim 2 or 3,
**characterized in that**
the plastics surface has been physically pretreated via application of a primer layer.

**5.** Use according to at least one of the preceding claims,
**characterized in that**
the plastics surface is biaxially oriented polyethylene terephthalate, polybutene, polypropylene, monoaxially oriented polypropylene, or biaxially oriented polypropylene, or polyethylene.

**6.** Use according to at least one of the preceding claims,
**characterized in that**
the plastics surface is a plastics foil.

**7.** Use according to Claim 6,
**characterized in that**
there is a pressure-sensitive-adhesive mass present on that free side of the plastics foil that is opposite to the coating with organopolysiloxane/polyurea block copolymer.

**8.** Use according to Claim 7,

**characterized in that**
the pressure-sensitive-adhesive mass has been selected from the group consisting of acrylate adhesives, polyurethane adhesives, and rubber adhesives.

**9.** Use according to Claim 8,
**characterized in that**
the pressure-sensitive-adhesive mass is a pressure-sensitive polyacrylate adhesive mass which encompasses a polymer which, based on the polymer, encompasses

b1) from 79 to 100% (w/w) of acrylate and/or methacrylate and/or free acids of these having the formula $CH_2=C(R^3)(COOR^4)$, where $R^3$ is H and/or $CH_3$ and $R^4$ is H and/or alkyl chains having from 1 to 30 carbon atoms; and
b2) from 0 to 30% (w/w) of olefinically unsaturated monomers having functional groups.

**10.** Use according to at least one of the preceding claims,
**characterized in that**
there is also at least one further functional layer adjacent to the backing layer.

**11.** Use according to at least one of the preceding claims,
**characterized in that**
the organopolysiloxane/polyurea block copolymer is polymerized in a reaction which proceeds in a single stage.

**12.** Use according to at least one of the preceding claims,
**characterized in that**
R is a monovalent hydrocarbon moiety having from one to six carbon atoms, in particular unsubstituted, particularly preferably a methyl moiety.

**13.** Use according to at least one of the preceding claims,
**characterized in that**
X is an alkylene moiety having from two to ten carbon atoms, preferably an uninterrupted alkylene moiety, particularly preferably propylene.

**14.** Use according to at least one of the preceding claims,
**characterized in that**
A is an NH group.

**15.** Use according to at least one of the preceding claims,
**characterized in that**
Y is a hydrocarbon moiety having from 3 to 13 carbon atoms, preferably an unsubstituted moiety, particularly preferably an aralkylene moiety, or linear or cyclic alkylene moiety.

**16.** Use according to at least one of the preceding claims,
**characterized in that**
n is a number which is at least 3, in particular at least 25, and moreover preferably at most 800, particularly preferably at most 400, very particularly preferably at most 250.

**17.** Use according to at least one of the preceding claims,
**characterized in that**
a is a number which is at most 50.

**18.** Use according to at least one of the preceding claims,
**characterized in that**
the coating is used as adhesion promoter, in particular for the bonding of adhesive silicone masses on the plastics backing materials.

## Revendications

**1.** Utilisation d’un copolymère séquencé d’organopolysiloxane/polyurée selon la formule 1

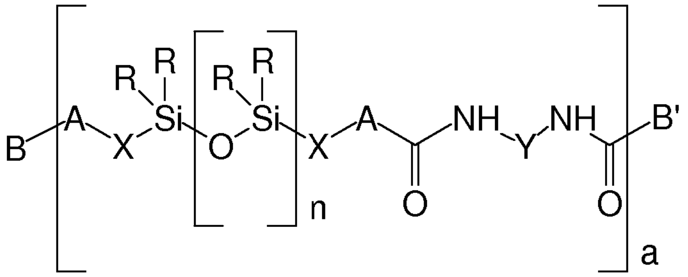

dans laquelle

R signifie un radical hydrocarboné monovalent, le cas échéant substitué par fluor ou chlore comprenant 1 à 20 atomes de carbone,
X signifie un radical alkylène comprenant 1 à 20 atomes de carbone, dans lequel des unités méthylène non adjacentes peuvent être remplacées par des groupes -O-, ou un radical arylène comprenant 6 à 22 atomes de carbone,
A signifie un atome d'oxygène ou un groupe amino -NR'-,
R' signifie hydrogène ou un radical alkyle comprenant 1 à 10 atomes de carbone,
Y signifie un radical hydrocarboné divalent, le cas échéant substitué par fluor ou chlore comprenant 1 à 20 atomes de carbone,
B, B' signifient un groupe terminal réactif ou non réactif qui sont liés par covalence au polymère,
n vaut un nombre de 1 à 4000 et
a vaut un nombre entier d'au moins 10,

comme revêtement sur une surface prétraitée en matériau synthétique, dont la proportion polaire d'énergie de surface est au moins deux fois plus grande que celle de la surface non traitée en matériau synthétique.

2. Utilisation selon la revendication 1, **caractérisée en ce qu'**il s'agit, pour la surface en matériau synthétique, d'une surface en matériau synthétique physiquement prétraitée.

3. Utilisation selon la revendication 2, **caractérisée en ce que** la surface en matériau synthétique est prétraitée physiquement par corona.

4. Utilisation selon la revendication 2 ou 3, **caractérisée en ce que** la surface en matériau synthétique est prétraitée physiquement par application d'une couche d'apprêt.

5. Utilisation selon au moins l'une quelconque des revendications précédentes, **caractérisée en ce qu'**il s'agit, pour la surface en matériau synthétique, de poly(téréphtalate d'éthylène) étiré biaxialement, de polybutène, de polypropylène, de polypropylène étiré monoaxialement, de polypropylène étiré biaxialement ou de polyéthylène.

6. Utilisation selon au moins l'une quelconque des revendications précédentes, **caractérisée en ce qu'**il s'agit, pour la surface en matériau synthétique, d'une feuille en matériau synthétique.

7. Utilisation selon la revendication 6, **caractérisée en ce qu'**une masse autoadhésive se trouve sur le côté de la feuille en matériau synthétique opposé au revêtement par le copolymère séquencé d'organopolysiloxane/polyurée.

8. Utilisation selon la revendication 7, **caractérisée en ce que** la masse autoadhésive est choisie dans le groupe constitué par les adhésifs à base d'acrylate, les adhésifs à base de polyuréthane et les adhésifs à base de caoutchouc.

9. Utilisation selon la revendication 8, **caractérisée en ce que** la masse autoadhésive est une masse autoadhésive à base de polyacrylate qui comprend un polymère qui est composé de, par rapport au polymère

(b1) 79 à 100% (P/P) d'ester de l'acide acrylique et/ou d'ester de l'acide méthacrylique et/ou leurs acides libres de formule $CH_2=C(R^3)(COOR^4)$, où $R^3$ représente H et/ou $CH_3$ et $R^4$ représente H et/ou des chaînes alkyle comprenant 1 à 30 atomes de carbone ; et
(b2) 0 à 30% (P/P) de monomères oléfiniquement insaturés présentant des groupes fonctionnels.

**10.** Utilisation selon au moins l'une quelconque des revendications précédentes, **caractérisée en ce qu'**encore au moins une autre couche fonctionnelle se trouve à proximité de la couche support.

**11.** Utilisation selon au moins l'une quelconque des revendications précédentes, **caractérisée en ce que** le copolymère séquencé d'organopolysiloxane/polyurée est polymérisé dans une réaction en une étape.

**12.** Utilisation selon au moins l'une quelconque des revendications précédentes, **caractérisée en ce que**

R signifie un radical hydrocarboné monovalent présentant 1 à 6 atomes de carbone, en particulier non substitué, de manière particulièrement préférée le radical méthyle.

**13.** Utilisation selon au moins l'une quelconque des revendications précédentes, **caractérisée en ce que**

X signifie un radical alkylène comprenant 2 à 10 atomes de carbone, de préférence un radical alkylène non interrompu, de manière particulièrement préférée le propylène.

**14.** Utilisation selon au moins l'une quelconque des revendications précédentes, **caractérisée en ce que**

A signifie un groupe NH.

**15.** Utilisation selon au moins l'une quelconque des revendications précédentes, **caractérisée en ce que**

Y signifie un radical hydrocarboné présentant 3 à 13 atomes de carbone, de préférence un radical non substitué, de manière particulièrement préférée un radical aralkylène, un radical alkylène linéaire ou cyclique.

**16.** Utilisation selon au moins l'une quelconque des revendications précédentes, **caractérisée en ce que**

n signifie un nombre d'au moins 3, en particulier d'au moins 25, et en outre de préférence d'au plus 800, de manière particulièrement préférée d'au plus 400, de manière tout particulièrement préférée d'au plus 250.

**17.** Utilisation selon au moins l'une quelconque des revendications précédentes, **caractérisée en ce que**

a signifie un nombre d'au plus 50.

**18.** Utilisation selon au moins l'une quelconque des revendications précédentes, **caractérisée en ce que** le revêtement est utilisé comme promoteur d'adhérence, en particulier pour la liaison de masses adhésives siliconées sur les matériaux support en matériau synthétique.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0250248 A1
- EP 1489129 A1
- US 5792554 A
- US 20030165676 A1
- US 6793759 B2
- US 5290615 A1
- US 5290625 A1


### In der Beschreibung aufgeführte Nicht-Patentliteratur


- **I. YILGÖR.** *Polymer,* 1984, 1800